# EUROPÄISCHE PATENTSCHRIFT

(11) **EP 3 972 884 B1**
(45) Veröffentlichungstag und Bekanntmachung des Hinweises auf die Patenterteilung: **03.09.2025**
(21) Anmeldenummer: 20732779.2
(22) Anmeldetag: 03.06.2020
(51) Int. Cl.: B61L 27/40, B61L 27/50, H04L 9/00, H04L 9/40, H04L 67/104, H04L 67/1095, B61L 15/00, H04L 9/32

(54) **EISENBAHNTECHNISCHE ANLAGE UND VERFAHREN ZUM BETRIEB EINER EISENBAHNTECHNISCHEN ANLAGE**
RAIL INSTALLATION AND METHOD FOR OPERATING A RAIL INSTALLATION
INSTALLATION TECHNIQUE FERROVIAIRE ET PROCÉDÉ POUR FAIRE FONCTIONNER UNE INSTALLATION TECHNIQUE FERROVIAIRE

(30) Priorität: 20.06.2019 DE 102019209004
(43) Veröffentlichungstag der Anmeldung: 30.03.2022
(73) Patentinhaber: Siemens Mobility GmbH, 81739 München (DE)
(72) Erfinder: BRABAND, Jens, 38106 Braunschweig (DE)
(74) Vertreter: Siemens Patent Attorneys
(86) Internationale Anmeldenummer: PCT/EP2020/065255
(87) Internationale Veröffentlichungsnummer: WO 2020/254107

(56) Entgegenhaltungen:
- WO-A1-2018/104276
- FERAS NASER: "REVIEW : THE POTENTIAL USE OF BLOCKCHAIN TECHNOLOGY IN RAILWAY APPLICATIONS : AN INTRODUCTION OF A MOBILITY AND SPEECH RECOGNITION PROTOTYPE", 2018 IEEE INTERNATIONAL CONFERENCE ON BIG DATA (BIG DATA), 1 December 2018 (2018-12-01), pages 4516 - 4524, XP055698022, ISBN: 978-1-5386-5035-6, DOI: 10.1109/BigData.2018.8622234

## Beschreibung

Moderne eisenbahntechnische Anlagen müssen genau wie andere Anlagen mit Sicherheitsverantwortung wirksam gegen digitale Sabotage geschützt werden. Diese Sabotage kann beispielsweise in elektronischen Stellwerken einer eisenbahntechnischen Anlage ansetzen. Vor dem Hintergrund stärkerer Modularisierung bzw. Verwendung von Komponenten unterschiedlicher Hersteller wird die Erfüllung dieser Aufgabe nicht einfacher. Auf den ersten Blick scheint hier die Blockchain-Technologie eine geeignete Maßnahme zu sein, um eine erhöhte Sicherheit zu bieten. Allerdings sind die Synchronisierungszyklen bekannter Blockchain-Systeme für sicherheitstechnische Anlagen wie eine Eisenbahnanlage nicht akzeptabel, weil sie viel zu langsam sind. Weiterhin ist auch der häufig verwendete Proof-of-Work-Algorithmus nicht echtzeitfähig und damit ungeeignet. Schließlich zeigt sich bei bekannten Blockchain-Systemen auch noch ein hoher und damit für eine eisenbahntechnische Anlage inakzeptabler Energiebedarf.

Aus der WO 2018 104 276 A1 ist ein Verfahren zum manipulationssicheren Speichern von Daten in einer ersten Blockchain einer Mehrzahl von Blockchains bekannt.

Es ist daher die Aufgabe der vorliegenden Erfindung, eine eisenbahntechnische Anlage und ein Verfahren zum Betreiben einer eisenbahntechnischen Anlage zur Verfügung zu stellen, die eine erhöhte Sicherheit bietet.

Die vorliegende Erfindung löst die Aufgabe durch eine eisenbahntechnische Anlage nach Patentanspruch 1 mit wenigstens einem Kommunikationsnetzwerk und mit einer Vielzahl von über das Kommunikationsnetzwerk miteinander verbundenen Elementen, von denen einige Elemente Teilnehmer einer ersten verteilten Datenbank sind und einige Elemente Teilnehmer einer zweiten verteilten Datenbank sind und die zum Abspeichern von elementspezifischen Informationen in wenigstens einer der verteilten Datenbank ausgebildet sind, wobei wenigstens eines der Elemente sowohl Teilnehmer der ersten Datenbank als auch Teilnehmer der zweiten Datenbank ist.

Ferner wird die Aufgabe gelöst durch ein Verfahren nach Patentanspruch 7 zum Betreiben einer eisenbahntechnischen Anlage mit wenigstens einem Kommunikationsnetzwerk und mit einer Vielzahl von über das Kommunikationsnetzwerk miteinander verbundenen Elementen, von denen einige Elemente Teilnehmer einer ersten verteilten Datenbank sind und einige Elemente Teilnehmer einer zweiten verteilten Datenbank sind, bei dem elementspezifische Informationen der ersten verteilten Datenbank oder in der zweiten verteilten Datenbank abgespeichert werden, wobei von wenigstens einem der Elemente elementspezifische Informationen sowohl in der ersten verteilten Datenbank als auch der zweiten verteilten Datenbank abgespeichert werden.

Die erfindungsgemäße Lösung sieht mehrere, wenigstens zwei verteilte Datenbanken innerhalb der eisenbahntechnischen Anlage vor, in denen die Elemente der eisenbahntechnischen Anlage, wie beispielsweise Fahrzeuge oder streckenseitige Elemente, elementspezifische Informationen abzuspeichern. Dadurch, dass wenigstens einer der Teilnehmer mit wenigstens zwei verteilten Datenbanken verbunden ist, werden die Informationen in beiden Datenbanken synchronisiert. Es ist also durch die Erfindung möglich, einzelne verteilte Datenbanken als Subsysteme des Gesamtsystems der eisenbahntechnischen Anlage einzurichten, in denen die Anzahl der Teilnehmer jeweils kleiner ist. Durch die Begrenzung der Teilnehmerzahl bzw. eine geringe Anzahl von Teilnehmern ergibt sich als ein Vorteil der erfindungsgemäßen Lösung, dass eine schnellere Synchronisierung innerhalb der verteilten Datenbanken möglich ist. Dadurch ist es möglich, innerhalb der eisenbahntechnischen Anlage ein echtzeitfähiges System mit mehreren verteilten Datenbanken aufzusetzen, das den hohen Sicherheitsanforderungen bei sicherheitstechnischen Anlagen Genüge tut.

Die erfindungsgemäße Lösung kann durch vorteilhafte Ausgestaltungen weiterentwickelt werden, die im Folgenden beschrieben sind.

So kann die Anzahl der Teilnehmer der verteilten Datenbanken jeweils kleiner oder gleich 20 sein. Dies hat den Vorteil, dass bei einer so kleinen Teilnehmerzahl eine sehr schnelle Synchronisierung unter den Teilnehmern jeder verteilten Datenbank möglich ist und beispielsweise der Einsatz von BFT-Protokollen (Byzantinische Fehler-Toleranz) möglich wird. BFT-Protokolle sind bei geringer Teilnehmerzahl echtzeitfähig.

Erfindungsgemäß ist wenigstens eine der verteilten Datenbanken ausgebildet, die Zustände der Teilnehmer über ein BFT-Protokoll zu synchronisieren. Per BFT-Protokoll ist eine Synchronisierung der Teilnehmer der verteilten Datenbank in Echtzeit möglich, so dass die hohen Sicherheitsanforderungen einer eisenbahntechnischen Anlage erfüllt werden.

Um die Erfindung für möglichst viele Bereiche der eisenbahntechnischen Anlage einsetzen zu können, können die Elemente als Fahrzeugelemente, wie beispielsweise Zügen oder Lokomotiven, oder als Streckenelemente, wie Weichen, Signale, etc., ausgebildet sein.

Um eine eindeutige Identifizierung von jedem Element zu gewährleisten, kann jedes Element zur Identifizierung gemäß einem PKI-Verfahren ausgebildet sein. Dabei wird üblicherweise jeder Teilnehmer durch PKI identifiziert (Public Key Infrastructure). Die PKI von dem Teilnehmer ist durch eine zentrale Autorität zertifiziert.

In einer weiteren vorteilhaften Ausgestaltung der erfindungsgemäßen eisenbahntechnischen Anlage kann wenigstens eine der verteilen Datenbanken als eine Blockchain ausgebildet sein.

Ferner kann jeder Teilnehmer ausgebildet sein, einige elementspezifischen Informationen, insbesondere Inputinformationen, zyklisch aus der verteilten Datenbank auszulesen und einige elementspezifische Informationen, insbesondere Inputinformationen und Statusinformationen, zyklisch mit allen anderen Teilnehmern wenigstens einer der verteilten Datenbanken zu synchronisieren. Dies hat den Vorteil, dass sämtlichen Teilnehmern jeder verteilten Datenbank in Echtzeit synchronisierte Informationen vorliegen, die auf Vollständigkeit und Gültigkeit geprüft werden können.

In einer vorteilhaften Ausgestaltung des erfindungsgemäßen Verfahrens können einige elementspezifische Informationen, insbesondere Inputinformationen, von wenigstens einem Teilnehmer zyklisch aus der verteilten Datenbank ausgelesen werden und einige elementspezifischen Informationen, insbesondere Inputinformationen und Statusinformationen, zyklisch mit allen anderen Teilnehmern wenigstens einer der verteilten Datenbanken synchronisiert werden. Diese Ausführungsform hat den oben bereits beschriebenen Vorteil, dass so quasi permanent in Echtzeit alle Informationen synchronisiert bei allen Teilnehmern der verteilten Datenbank vorliegen und geprüft werden können. So kann eine hohe Sicherheit der eisenbahntechnischen Anlage gewährleistet ist.

Die Erfindung wird im Folgenden mit Bezug auf die beigefügten Zeichnungen erläutert.

Es zeigen:
- Fig. 1: eine schematische Darstellung einer beispielhaften Ausführungsform einer eisenbahntechnischen Anlage,
- Fig. 2: eine schematische Darstellung einer weiteren Ausführungsform einer erfindungsgemäßen eisenbahntechnischen Anlage.

Zunächst wird die beispielhafte Ausführungsform einer erfindungsgemäßen eisenbahntechnischen Anlage 1 beschrieben.

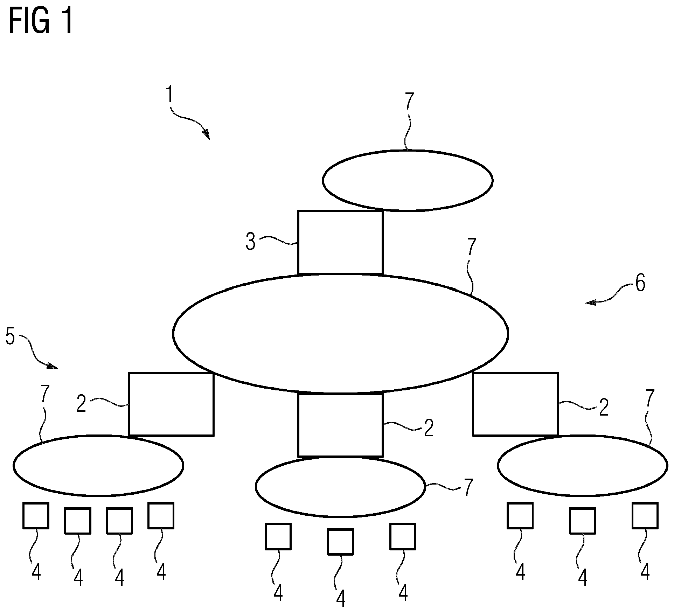

Die beispielhafte Ausführungsform der verkehrstechnischen Anlage umfasst mehrere Stellwerke 2 und mehrere Betriebszentralen 3 und mehrere Feldelemente 4. Sowohl die Betriebszentralen 3, von denen in Fig. 1 lediglich eine dargestellt ist, als auch die Stellwerke 2 und Feldelemente 4 sind alle Elemente 5 der eisenbahntechnischen Anlage 1. Die verkehrstechnische Anlage 1 umfasst ferner ein Kommunikationsnetzwerk 6, durch das die Elemente 5 miteinander kommunikationstechnisch verbunden sind. Das Kommunikationsnetzwerk 6 kann beispielsweise per 5G-Technologie, WLAN oder Ethernet ausgebildet sein. Die eisenbahntechnische Anlage 1 weist ferner mehrere verteilte Datenbanken 7 auf, deren Teilnehmer die Elemente 5 sind. Jedes Element 5 ist Teilnehmer in wenigstens einer der verteilten Datenbanken 7, manche Elemente 5 sind auch Teilnehmer in mehreren Datenbanken 7. Die verteilten Datenbanken 7 können als Blockchain ausgebildet sein, können aber gegebenenfalls auch ohne sämtliche übliche Merkmale einer Blockchain auskommen, wie beispielsweise der Bildung eines Hashwertes von jedem Block.

Die eisenbahntechnische Anlage ist in der beispielhaften Ausführungsform in Fig. 1 hierarchisch aufgebaut. Dies bedeutet, dass die dargestellte Betriebszentrale 3 mehrere Stellwerke 2 steuert, die wiederum jeweils mehrere Feldelemente 4 ansteuern. Der Einfachheit halber wird hier nur generell von Feldelementen 4 gesprochen, obwohl diese eigentlich selbstverständlich auch Feldcontroller aufweisen, die angesteuert werden und wiederum mehrere Feldelemente 4 verarbeiten.

Durch die Vielzahl von verteilten Datenbanken 7 ist die eisenbahntechnische Anlage in Subsysteme aufgeteilt, mit Elementen 5 als Teilnehmer, die sich über die verteilten Datenbanken 7 synchronisieren und koordinieren. Da die Anzahl der Teilnehmer der verschiedenen verteilten Datenbanken 7 hier meist kleiner als 10 und in jedem Fall kleiner als 20 ist, wird zur Synchronisierung der Teilnehmer BFT-Technologie eingesetzt. BFT-Technologie (Byzantinische Fehler-Toleranz) ist ein bekanntes Verfahren, um in Echtzeit eine begrenzte Anzahl von Teilnehmern zu synchronisieren.

Die verschiedenen verteilten Datenbanken 7 weisen jeweils die folgenden Eigenschaften auf:
- Jeder Teilnehmer wird durch seine PKI (Public Key Infrastructure) identifiziert, wobei diese PKI durch eine zentrale Autorität (nicht dargestellt) zertifiziert ist. Diese zentrale Autorität kann beispielsweise der Betreiber der eisenbahntechnischen Anlage sein.
- Die Konfiguration der eisenbahntechnischen Anlage 1 sowie der berechtigten Elemente 5, die Teilnehmer in den verteilten Datenbanken sind, ist jedem Element 5 bekannt.
- Es gibt ein BFT-Synchronisationsprotokoll, das in Echtzeit die Zustände der Teilnehmer jeder verteilten Datenbank 7 synchronisiert.
- Das Gesamtsystem und damit alle verteilten Datenbanken 7 arbeiten zyklisch, insbesondere nach dem gleichen Zyklus.
- Jedes Element 5 hat zu jedem Zeitpunkt ein digitales Abbild vom Zustand der Teilsysteme (also der verteilten Datenbanken 7), in denen es Mitglied ist.
- Sämtliche Elemente 5 besitzen einen Prüfalgorithmus, der für ein digitales Abbild die Prüfung der Sicherheitsbedingungen erlaubt. Beispielsweise kann dies im einfachsten Fall eine Entscheidungstabelle oder eine Verschlusstafel sein.
- Jedes Element 5 speichert Inputs, Outputs sowie Zustandsinformationen in der eigenen verteilten Datenbank 7. Diese verteilte Datenbank 7 arbeitet nach einem Proof-of-athority-Verfahren, bei dem neue Datenblöcke nicht per Hashwert angefügt werden, sondern mit digitaler Signatur per PKI. Hierfür wird die digitale Signatur des vorhergehenden Blocks einbezogen. Proof-of-athority erfolgt hierbei über die gültige Signatur des PKI.
- Um den gegenseitigen Austausch von Nachrichten in jedem Zyklus zu erlauben, sind die Elemente 5 durch das leistungsfähige Kommunikationsnetzwerk 6 miteinander verbunden, das beispielsweise nach dem 5G-Standard arbeitet.

Beim Betrieb der beschriebenen eisenbahntechnischen Anlage 1 in Fig. 1 wird wie folgt vorgegangen:
- Jedes Element 5 erhält zu Beginn des Zyklus in jeder verteilten Datenbank 7, dem es angehört, sämtliche Inputinformationen. Inputinformationen können hier beispielsweise die Anforderung einer Fahrstraße, das Stellen einer Weiche oder ähnliches sein. Ist das Element 5 Teilnehmer in mehreren verteilten Datenbanken 7, so erhält es die Inputinformationen selbstverständlich aus allen diesen verteilten Datenbanken 7.
- Anschließend überprüft das Element 5 die Inputinformation auf Vollständigkeit. Das Element 5 erhält in jedem Zyklus von jedem anderen Element 5, das ebenfalls Teilnehmer der gleichen verteilten Datenbank 7 ist, Inputinformationen, wie beispielsweise Status und Zustandswechsel.
- Das Element 5 synchronisiert die Inputinformation sowie seinen Status per BFT-Protokoll mit allen anderen Elementen 5 der gleichen verteilten Datenbank 7. Somit werden in jedem Zyklus Statusinformationen wie z. B. Beleginformation eines Gleisabschnitts, sowie seine Anforderungen für eine Änderung in der eisenbahntechnischen Anlage 1, wie z. B. der Umlauf einer Weiche oder das Einstellen einer Fahrstraße, an alle anderen Elemente 5 mit seiner digitalen PKI-Signatur verteilt.
- Jedes Element 5 als Teilnehmer einer verteilten Datenbank 7 sammelt alle Informationen und prüft ihre Vollständigkeit und Gültigkeit.
- Jedes Element 5 aktualisiert sein digitales Abbild mit den erhaltenen Statusinformationen und prüft für jede Änderungsanforderung sukzessive die grundlegenden Sicherheitsanforderungen. Anschließend werden nur solche Änderungsanforderungen übernommen, für die alle Sicherheitsanforderungen erfüllt werden können. Unsichere oder kooperierende Anforderungen werden nicht übernommen. Bei Konflikten kann jedes Element selbstständig entscheiden, welche Anforderungen zurückgewiesen werden.
- Im Fall von unterschiedlichen Zuständen müssen alle Elemente 5 resynchronisiert und per BFT-Protokoll, beispielsweise per Mehrheitsentscheid, wieder einen abgestimmten Zustand herstellen.
- Im Falle eines durchgeplanten Zwischenfalls müssen die lokal verteilten Datenbanken 7 aller Teilnehmer ausgewertet werden.

Alternativ kann für nicht-sicherheitsrelevante Anwendungen, wie beispielsweise in der Leittechnik, auf die Vollständigkeitsforderungen in jedem Schritt verzichtet werden.

Weiterhin ist es denkbar, den unterschiedlichen Elementen 5 unterschiedliche Rollen zuzuweisen. Diese Rollen können beispielsweise die eines Vollteilnehmers sein oder solche, die nur ihren Status liefern oder updaten, aber keine Blöcke prüfen oder einfügen.

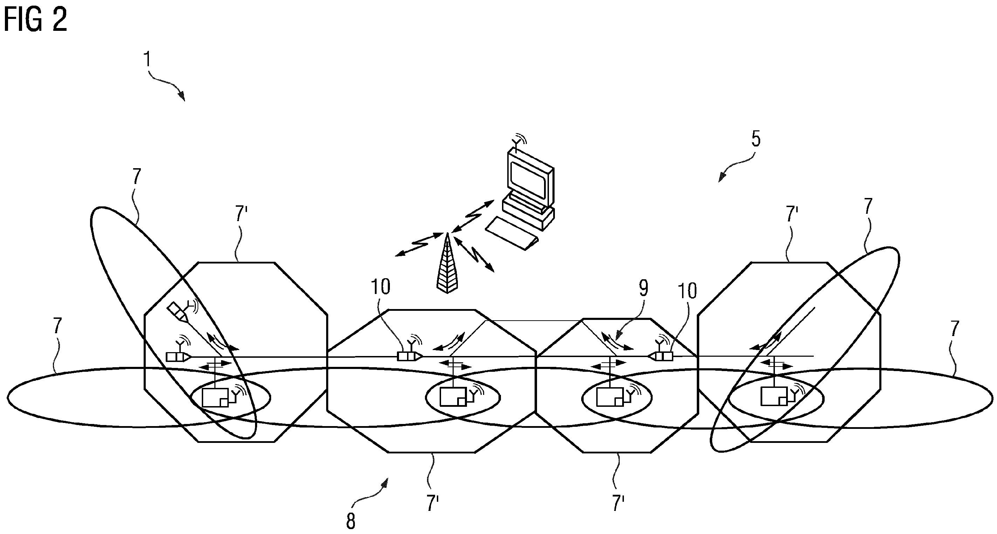

Im Folgenden wird die beispielhafte Ausführungsform der eisenbahntechnischen Anlage in Fig. 2 beschrieben. Gleiche Komponenten werden mit gleichem Bezugszeichen bezeichnet. Der Einfachheit halber wird lediglich auf die Unterschiede zu der Ausführungsform in Fig. 1 eingegangen.

Die eisenbahntechnische Anlage 1 in Fig. 2 umfasst eine Fahrstecke 8 mit Weichenelementen 9 und Fahrzeugen 10. Eine ähnliche eisenbahntechnische Anlage 1 ist in der DE 10 2015 218 987 A1 beschrieben, auf die hiermit Bezug genommen wird.

Wie bei der Ausführungsform in Fig. 1 wird auch bei der Ausführungsform in Fig. 2 die eisenbahntechnische Anlage 1 in Subsysteme aufgeteilt, deren Elemente 5 über eine verteilte Datenbank 7 miteinander verbunden sind. Die Weichenelemente 9 und die Fahrzeuge 10 auf der Fahrstecke 8 stellen bei der Ausführungsform in Fig. 2 die Elemente 5 dar. Bei der Ausführungsform in Fig. 2 sind beispielsweise solche Elemente 5 in Zellen 7' gruppiert, die in der Umgebung einer Weiche 9 angeordnet sind. In Fig. 2 sind diese Zellen 7' beispielsweise achteckig dargestellt. Die Weichensteuerungen (nicht dargestellt) der Weichenelemente 9 sind mit verschiedenen direkten benachbarten Weichenelementen 9 über eine verteilte Datenbank 7 verbunden, die in Fig. 2 als Ellipse dargestellt ist. Die verteilten Datenbanken 7 und deren Elemente 5 sind wie bei der Ausführungsform in Fig. 1 beschrieben aufgebaut.

Im Betrieb der eisenbahntechnischen Anlage 1 nach der beispielhaften Ausführungsform in Fig. 2 ist der Ablauf ähnlich dem gemäß Fig. 1 beschriebenen.

## Patentansprüche

1. Eisenbahntechnische Anlage (1)
mit wenigstens einem Kommunikationsnetzwerk (6) und mit einer Vielzahl von über das Kommunikationsnetzwerk (6) miteinander verbundenen Elementen (5), von denen einige Elemente Teilnehmer einer ersten verteilten Datenbank (7) sind und einige Elemente Teilnehmer einer zweiten verteilten Datenbank (7) sind und die zum Abspeichern von elementspezifischen Informationen in wenigstens einer der verteilten Datenbanken (7) ausgebildet sind,
wobei wenigstens eines der Elemente (5) sowohl Teilnehmer der ersten Datenbank (7) als auch Teilnehmer der zweiten Datenbank (7) ist und
wenigstens eine der verteilten Datenbanken (7) ausgebildet ist, die Zustände der Teilnehmer über ein BFT-Protokoll zu synchronisieren.

2. Eisenbahntechnische Anlage (1) nach Anspruch 1,
**dadurch gekennzeichnet , dass**
die Anzahl der Teilnehmer der verteilten Datenbanken (7) jeweils kleiner oder gleich 20 ist.

3. Eisenbahntechnische Anlage (1) nachAnspruch 1 oder 2,
**dadurch gekennzeichnet , dass**
die Elemente (5) als Fahrzeugelemente oder als Streckenelemente, wie Weichen, Signale, etc., ausgebildet sind.

4. Eisenbahntechnische Anlage (1) nach einem der oben genannten Ansprüche,
**dadurch gekennzeichnet , dass**
jedes Element (5) zur Identifizierung gemäß einem PKI-Verfahren ausgebildet ist.

5. Eisenbahntechnische Anlage (1) nach einem der oben genannten Ansprüche,
**dadurch gekennzeichnet , dass**
wenigstens eine der verteilten Datenbanken (7) als eine Blockchain ausgebildet ist.

6. Eisenbahntechnische Anlage (1) nach einem der oben genannten Ansprüche,
**dadurch gekennzeichnet , dass**
jeder Teilnehmer ausgebildet ist, einige elementspezifischen Informationen, insbesondere Inputinformationen, zyklisch aus der verteilten Datenbank (7) auszulesen und einige elementspezifische Informationen, insbesondere Inputinformationen und Statusinformationen, zyklisch mit allen anderen Teilnehmern wenigstens einer der verteilten Datenbanken (7) zu synchronisieren.

7. Verfahren zum Betrieb einer eisenbahntechnischen Anlage (1) mit wenigstens einem Kommunikationsnetzwerk (6) und mit einer Vielzahl von über das Kommunikationsnetzwerk (6) miteinander verbundenen Elementen (5), von denen einige Elemente Teilnehmer einer ersten verteilten Datenbank (7) sind und einige Elemente Teilnehmer einer zweiten verteilten Datenbank (7) sind,
bei dem elementspezifische Informationen in der ersten verteilten Datenbank (7) oder in der zweiten verteilten Datenbank (7) abgespeichert werden,
wobei von wenigstens einem der Elemente (5) elementspezifische Informationen sowohl in der ersten verteilten Datenbank (7) als auch der zweiten verteilten Datenbank (7) abgespeichert werden und
die Zustände der Teilnehmer von wenigstens einer der verteilten Datenbanken (7) über ein BFT-Protokoll synchronisiert werden.

8. Verfahren nach Anspruch 7,
**dadurch gekennzeichnet , dass**
einige elementspezifischen Informationen, insbesondere Inputinformationen, von wenigstens einem Teilnehmer zyklisch aus der verteilten Datenbank (7) ausgelesen werden und einige elementspezifischen Informationen, insbesondere Inputinformationen und Statusinformationen, zyklisch mit allen anderen Teilnehmern wenigstens einer der verteilten Datenbanken (7) synchronisiert werden.

## Claims

1. Railway engineering installation (1)
with at least one communication network (6) and with a large number of elements (5) that are interconnected via the communication network (6), of which some elements are participants in a first distributed database (7) and some elements are participants in a second distributed database (7) and which are embodied to store element-specific information in at least one of the distributed databases (7),
wherein at least one of the elements (5) is both a participant in the first database (7) and a participant in the second database (7) and
at least one of the distributed databases (7) is embodied to synchronise the states of the participants via a BFT protocol.

2. Railway engineering installation (1) according to claim 1,
**characterised in that**
the number of participants in the distributed databases (7) is less than or equal to 20 in each case.

3. Railway engineering installation (1) according to claim 1 or 2,
**characterised in that**
the elements (5) are embodied as vehicle elements or as route elements, such as points, signals, etc.

4. Railway engineering installation (1) according to one of the claims mentioned above,
**characterised in that**
each element (5) is embodied for identification according to a PKI method.

5. Railway engineering installation (1) according to one of the claims mentioned above,
**characterised in that**
at least one of the distributed databases (7) is embodied as a blockchain.

6. Railway engineering installation (1) according to one of the claims mentioned above,
**characterised in that**
each participant is embodied to read out some element-specific information, in particular input information, from the distributed database (7) on a cyclical basis and to synchronise some element-specific information, in particular input information and status information, with all other participants in at least one of the distributed databases (7) on a cyclical basis.

7. Method for operating a railway engineering installation (1) with at least one communication network (6) and with a large number of elements (5) that are interconnected via the communication network (6), of which some elements are participants in a first distributed database (7) and some elements are participants in a second distributed database (7),
in which element-specific information is stored in the first distributed database (7) or in the second distributed database (7),
wherein element-specific information of at least one of the elements (5) is stored both in the first distributed database (7) and in the second distributed database (7) and
the states of the participants are synchronised by at least one of the distributed databases (7) via a BFT protocol.

8. Method according to claim 7,
**characterised in that**
some element-specific information, in particular input information, of at least one participant is read out from the distributed database (7) on a cyclical basis and some element-specific information, in particular input information and status information, is synchronised with all other participants in at least one of the distributed databases (7) on a cyclical basis.

## Revendications

1. Installation (1) de la technique des chemins de fer
comprenant au moins un réseau (6) de communication et comprenant une pluralité d'éléments (5), communiquant entre eux par le réseau (6) de communication, dont certains éléments sont des participants à une première base (7) de données répartie et certains éléments sont des participants à une deuxième base (7) de données répartie et qui sont constitués pour mettre en mémoire des informations spécifiques à un élément dans au moins l'une des bases (7) de données répartie,
dans lequel au moins l'un des éléments (5) est participant à la fois à la première base (7) de données et à la deuxième base (7) de données et
au moins l'une des bases (7) de données répartie est constituée pour synchroniser les états des participants par un protocole BFT.

2. Installation (1) de la technique des chemins de fer suivant la revendication 1,
**caractérisée en ce que**
le nombre des participants aux bases (7) de données réparties est respectivement inférieur ou égal à 20.

3. Installation (1) de la technique des chemins de fer suivant la revendication 1 ou 2,
**caractérisée en ce que**
les éléments (5) sont constitués sous la forme d'éléments de véhicule, ou sous la forme d'éléments de voie, comme des aiguillages, des signaux, etc.

4. Installation (1) de la technique des chemins de fer suivant l'une des revendications précédentes,
**caractérisée en ce que**
chaque élément (5) est constitué pour l'identification suivant un procédé PKI.

5. Installation (1) de la technique des chemins de fer suivant l'une des revendications précédentes,
**caractérisée en ce que**,
au moins l'une des bases (7) de données répartie est constituée sous la forme d'une chaîne de blocs.

6. Installation (1) de la technique des chemins de fer suivant l'une des revendications précédentes,
**caractérisée en ce que**
chaque participant est constitué pour lire certaines informations spécifiques à un élément, en particulier des informations d'entrée, cycliquement dans la base (7) de données répartie et certaines informations spécifiques aux éléments, en particulier des informations d'entrée et des informations de statut, et pour synchroniser certaines informations spécifiques à un élément, en particulier des informations d'entrée et des informations de statut, cycliquement avec tous les autres participants d'au moins l'une des bases (7) de données répartie.

7. Procédé pour faire fonctionner une installation (1) de la technique des chemins de fer comprenant au moins un réseau (6) de communication et comprenant une pluralité d'éléments (5) communiquant entre eux par le réseau (6) de communication, dont certains éléments sont des participants à une première base (7) de données répartie et certains éléments sont des participants à une deuxième base (7) de données répartie,
dans lequel on met en mémoire des informations spécifiques à un élément dans la première base (7) de données répartie ou dans la deuxième base (7) de données répartie,
dans lequel on met en mémoire des informations spécifiques à un élément d'au moins l'un des éléments (5) à la fois dans la première base (7) de données répartie et dans la deuxième base (7) de données répartie et
on synchronise par un protocole BFT les états des participants d'au moins l'une des bases (7) de données répartie.

8. Procédé suivant la revendication 7,
**caractérisé en ce que** l'
on lit certaines informations spécifiques à un élément, en particulier des informations d'entrée, par au moins un participant cycliquement dans la base (7) de données répartie et certaines informations spécifiques à un élément, en particulier des informations d'entrée et des informations de statut, cycliquement par tous les autres participants à au moins l'une des bases (7) de données répartie.
